# EUROPÄISCHE PATENTSCHRIFT

(11) **EP 3 074 739 B1**
(45) Veröffentlichungstag und Bekanntmachung des Hinweises auf die Patenterteilung: **03.08.2022**
(21) Anmeldenummer: 14766662.2
(22) Anmeldetag: 10.09.2014
(51) Int. Cl.: G01J 5/04, G01J 5/00, G01J 5/10, G01J 5/60, H05B 45/18, H05B 45/56, H05B 47/105

(54) **LEUCHTE UND VERFAHREN ZUR TEMPERATURBESTIMMUNG**
LIGHT FIXTURE AND TEMPERATURE DETERMINATION METHOD
LLUMINAIRE ET PROCÉDÉ DE SURVEILLANCE DE TEMPÉRATURE

(30) Priorität: 29.11.2013 DE 102013020698
(43) Veröffentlichungstag der Anmeldung: 05.10.2016
(73) Patentinhaber: Eaton Intelligent Power Limited, Dublin 4 (IE)
(72) Erfinder: OTT, Toni, 69151 Neckargemünd (DE)
(74) Vertreter: Novagraaf Group
(86) Internationale Anmeldenummer: PCT/EP2014/002451
(87) Internationale Veröffentlichungsnummer: WO 2015/078536

(56) Entgegenhaltungen:
- EP-A2- 0 516 398
- DE-A1- 19 756 953
- US-A1- 2005 156 531
- US-A1- 2008 157 698
- US-A1- 2009 302 766
- US-A1- 2010 084 979
- US-A1- 2013 181 611

## Beschreibung

Die Erfindung betrifft ein Verfahren zur Temperaturüberwachung einer Leuchte mit zumindest einer LED (lichtemittierende Diode) als Leuchtmittel. Eine solche LED weist einen begrenzten Lichtabstrahlwinkel für abgegebene Lichtstrahlung auf. Solche Leuchten und / oder Verfahren zur Überwachung von Leuchten sind aus der EP 0 516 398 A2, der US 2010/0084979 A1, der DE 197 56 953 A1, der US 2005/0156531 A1, der US 2008/0157698 A1 und aus der US 2013/0181611 A1 bekannt.

Ein entsprechender Abstrahlwinkel beträgt bei einer LED beispielsweise zwischen 15° und 120°, wobei der Abstrahlwinkel in der Regel durch eine kleine Linsenstruktur der LED festgelegt ist. Bei solchen Leuchtmitteln ist zu beachten, dass zwar der Wirkungsgrad relativ groß ist, allerdings auch bei LEDs nur beispielsweise max. 20% der eingesetzten Energie in sichtbares Licht umgewandelt wird. Der Rest der eingesetzten Energie wird in Wärme umgewandelt. Um die LED durch die erzeugte Wärme nicht zu schädigen, wird diese in der Regel durch Kühlkörper, aktive Kühlung, Flüssigkeitskühlung oder dergleichen abgeführt. Ansonsten würde die Lebensdauer der LED und auch deren Lichtausbeute durch die hohe Wärmeeinwirkung negativ beeinflusst oder reduziert. In der Regel kann gesagt werden, dass bei Temperaturen von 120°C oder mehr ein entsprechender Halbleiterkristall der LED geschädigt wird und so zu bleibenden Beeinträchtigungen von Lebensdauer, Lichtfarbe, Lichtausbeute und andere Beeinträchtigungen der LED führt. Auch ist bei explosionsgeschützten Leuchten bei Überschreiten eines kritischen Temperaturwertes von einer Zündwirksamkeit der LED auszugehen, woraus Gefahr für Leib und Leben entsteht. Um dies zu verhindern, müssen geeignete Maßnahmen getroffen werden, um eine Überschreitung einer kritischen Temperatur (üblicherweise Temperaturklassen, bzw. die Zündtemperatur des Gas-Luft-Gemisches, im welchen eine explosionsgeschütztes Betriebsmittel eingesetzt wird) zu verhindern.

Der Erfindung liegt daher die Aufgabe zugrunde, eine Temperaturüberwachung der LED zur Vermeidung entsprechender Schäden zu ermöglichen.

Diese Aufgabe wird durch die Verfahrensmerkmale nach Patentanspruch 1 gelöst.

Die Leuchte weist einen Infrarotsensor außerhalb des Lichtabstrahlwinkels des Leuchtmittels auf, der dem Leuchtmittel zur berührungslosen Bestimmung von dessen Temperatur zugeordnet ist. Erfindungsgemäß wird der Infrarotsensor außerhalb des Lichtabstrahlwinkels des Leuchtmittels angeordnet, eine Wärmestrahlung des Leuchtmittels mittels des Infrarotsensors gemessen, und das Infrarotsensorsignal zur Temperaturbestimmung des Leuchtmittels ausgewertet.

Die Leuchte wird dabei in einem explosionsgefährdeten Bereich angeordnet und das Leuchtmittels abgeschaltet, wenn der ermittelte Temperaturwert einen vorgegebenen maximalen Temperaturgrenzwert überschreitet, um eine Zündung in dem explosionsgefährdeten Bereich durch ein überhitztes Leuchtmittel zu vermeiden.

Durch die Anordnung des Infrarotsensors außerhalb des entsprechenden Lichtabstrahlwinkels erfolgt beispielsweise kein Aufheizen des Infrarotsensors durch Lichtstrahlung. Stattdessen wird von dem Infrarotsensor vom Leuchtmittel abgegebene Wärmestrahlung erfasst. Dazu sei angemerkt, dass bei Erwärmen eines Körpers sich üblicherweise eine sogenannte Schwarzkörperstrahlung ergibt, die ein sehr charakteristisches Spektrum aufweist, das einzig von der Temperatur des entsprechenden Körpers abhängt. Unterhalb von 600°C ist die Schwarzkörperstrahlung im infraroten Bereich des Spektrums und nicht sichtbar. Weiterhin wird die Schwarzkörperstrahlung in einem breiten Bereich abgegeben, der über den entsprechenden Lichtabstrahlwinkel hinausgeht. Theoretisch wird die Schwarzkörperstrahlung in den gesamten Raum um den entsprechend erwärmten Körper abgegeben.

Da in der Regel auf der der Lichtabstrahlrichtung gegenüberliegenden Seite des Leuchtmittels ein entsprechender Kühlkörper oder dergleichen angeordnet ist, ergibt sich als vorteilhafte Anordnung für den Infrarotsensor, wenn dieser im Wesentlichen orthogonal zur mittleren Abstrahlrichtung neben dem Leuchtmittel angeordnet ist. Auf diese Weise ist sichergestellt, dass Wärmestrahlung vom Leuchtmittel ohne Beeinflussung des Kühlkörpers erfasst wird und gleichzeitig der Infrarotsensor außerhalb des Lichtabstrahlwinkels des Leuchtmittels angeordnet ist.

Ein solcher Lichtabstrahlwinkel beträgt beispielsweise 120°. Dies bedeutet, dass gegenüber einer senkrechten Ausstrahlung aus dem Leuchtmittel der beidseitige Lichtabstrahlwinkel 60° beträgt. Die Anordnung des entsprechenden Infrarotsensors wird in diesem Fall bei 90° erfolgen.

In der Regel weist eine entsprechende Leuchte nicht nur eine LED, sondern mehrere diese Leuchtmittel auf. D.h., ein entsprechendes Leuchtmittel gemäß Erfindung kann ein LED-Strahler, ein LED-Spot, LED-Strip, ein LED-Leuchtband oder dergleichen sein. In diesem Zusammenhang kann es ausreichend sein, wenn nur eine LED der verwendeten LEDs mittels des Infrarotsensors überwacht wird. Es ist allerdings auch vorstellbar, dass zwei oder mehr Infrarotsensoren entsprechend verteilt um das gegebenenfalls aus einer Vielzahl von LED bestehende Leuchtmittel angeordnet sind. Ebenfalls vorstellbar ist, dass ein Lichtleiter den einzelnen LEDs zugeordnet wird, der die gleichzeitige Erfassung des abgestrahlten Infrarotanteils aller LEDs ermöglicht und an dessen Austritt der Infrarotsensor angeordnet wird. Um innerhalb der Leuchte oder zumindest nahe bei der Leuchte direkt eine Auswertung der Wärmestrahlung vornehmen zu können, kann der Infrarotsensor mit einer Auswerte/Steuereinrichtung zur Temperaturbestimmung und Steuerung des Leuchtmittels verbunden sein. D.h., durch diese Auswerte-/Steuereinrichtung kann die Temperatur aus dem entsprechenden Infrarotsensorsignal bestimmt werden und gegebenenfalls angezeigt oder an eine entfernte Stelle übermittelt werden. Weiterhin kann die Auswerte/Steuereinrichtung auch zur Steuerung des Leuchtmittels eingesetzt sein. Eine solche Steuerung kann beispielsweise dann von Vorteil sein, wenn der Auswerte/Steuereinrichtung ein maximaler Temperaturgrenzwert als Abschaltwert vorgegeben ist. Wird bei der Temperaturbestimmung eine Temperatur höher als dieser maximale Temperaturgrenzwert ermittelt, erfolgt ein Abschalten des Leuchtmittels oder der gesamten Leuchte.

In diesem Zusammenhang sei weiterhin angemerkt, dass eine Temperaturerhöhung des Leuchtmittels auch ohne dessen Betrieb stattfinden kann, indem beispielsweise die Leuchte und insbesondere das Leuchtmittel einer externen Strahlung, wie Sonnenstrahlung, ausgesetzt sind. Bei entsprechenden Außenleuchten ist z.B. im Sommer festgestellt worden, dass allein durch Sonnenschein Temperaturen von mehr als 70°C auftreten können. Auch bei Messung einer solchen Temperatur kann mittels der Auswerte/Steuereinrichtung beispielsweise eine Zwangskühlung des Leuchtmittels oder der gesamten Leuchte eingeleitet werden.

Im Zusammenhang mit solcher Sonneneinstrahlung kann es sich als Nachteil erweisen, dass der Infrarotsensor nicht nur die Wärme des Leuchtmittels, sondern auch Umgebungswärme ermittelt. Um dies zu verhindern, kann der Infrarotsensor gegenüber Umgebungswärmestrahlung abgeschirmt sein.

Ein weiteres Mittel, um solche Umgebungswärmestrahlung zu berücksichtigen, kann darin gesehen werden, dass dem Infrarotsensor ein zweiter Infrarotsensor zur Ermittlung und Kompensation der Umgebungswärmestrahlung zugeordnet ist. Das heißt, der zweite Infrarotsensor ist insbesondere in Richtung Umgebung gerichtet und ermittelt ggf. die die Leuchte bzw. das Leuchtmittel erreichende Umgebungswärmestrahlung, wie beispielsweise Sonnenstrahlung. Diese wird erfasst und zur Kompensation der Temperaturmessung des Leuchtmittels mittels des anderen Infrarotsensors verwendet.

In diesem Zusammenhang kann außerdem eine Wichtung der Messungen der Wärmestrahlung bei dem dem Leuchtmittel zugeordneten Infrarotsensor und dem der Umgebung zugeordneten Infrarotsensor erfolgen, die beispielsweise sonnenstandsabhängig oder in anderer Weise sich ändernder Umgebungswärme berücksichtigt.

Verfahrensmäßig sei noch kurz darauf hingewiesen, dass entsprechend, siehe auch die obigen Ausführungen, ein Abschalten des Leuchtmittels durch insbesondere die Auswerte-/Steuereinrichtung erfolgen kann, wenn der gemessene Temperaturwert den vorgegebenen maximalen Temperaturgrenzwert überschreitet.

Außerdem kann ein entsprechendes Abschirmen des Infratorsensors gegenüber Umgebungswärmestrahlung beispielsweise durch einen Kühlkörper oder dergleichen erfolgen. In manchen Fällen kann auch die Anordnung einer entsprechenden Folie ausreichend sein.

Weiterhin kann es als günstig angesehen werden, wenn zumindest einer der verwendeten Infrarotsensoren verstellbar angeordnet ist. Das heißt, er kann ggf. einem anderem Leuchtmittel zugeordnet werden oder in seiner Ausrichtung zum Leuchtmittel variiert werden, falls dies durch Temperaturverteilungen innerhalb der Leuchte, Erzeugung von Wärme durch verschiedene Leuchtmittel oder auch durch externe Wärmestrahlung bedingt ist.

Dies kann selbstverständlich auch für alle verwendeten Infrarotsensoren gelten.

Im Folgenden wird ein vorteilhaftes Ausführungsbeispiel der Erfindung anhand der in der Zeichnung beigefügten Figur näher erläutert.

Es zeigt:

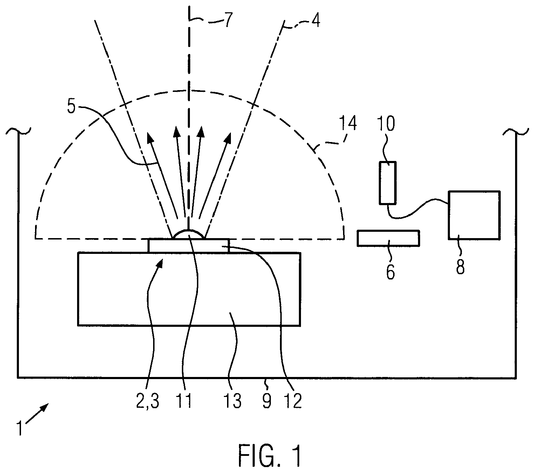

Figur 1 eine prinzipielle Darstellung einer Leuchte mit Infrarotsensor gemäß Erfindung.

In Figur 1 ist ein teilweiser Schnitt durch eine Leuchte 1 mit erfindungsgemäßer Temperaturbestimmung des Leuchtmittels prinzipiell dargestellt. Die Leuchte 1 ist mit Leuchtengehäuse 9 und darin angeordnetem Leuchtmittel 3 dargestellt. Beispielsweise ist eine entsprechende Lichtaustrittsöffnung der Leuchte bzw. des Leuchtengehäuses nicht weiter dargestellt. Diese kann allerdings in üblicher Weise in Richtung der von dem Leuchtmittel 3 abgegebenen Lichtstrahlen angeordnet sein. Außerdem ist in Figur 1 nur ein Leuchtmittel in Form einer lichtemittierenden Diode (LED) 2 dargestellt. Selbstverständlich können auch mehrere solcher LEDs in Form eines Stripes oder Leuchtbandes angeordnet sein.

Die LED 2 besteht in der Regel aus einer Leiterplatte 12 mit dem entsprechenden Halbleiter und einer Linseneinrichtung 11 zur Zerstreuung oder Sammlung von abgegebenem Licht. Durch die LED2 werden die entsprechenden Lichtstrahlen 5 in einem bestimmten Raumbereich abgegeben, der durch den dargestellten Abstrahlwinkel 4 bestimmt ist. Dieser beträgt je nach LED und entsprechender Linseneinrichtung 11 beispielsweise zwischen 15° und 120°. Durch den entsprechenden Abstrahlwinkel 4 wird eine mittlere Abstrahlrichtung 7 festgelegt, die in der Regel senkrecht vom Leuchtmittel 3 absteht.

Bei Einsatz des Leuchtmittels oder auch bei Bestrahlung des Leuchtmittels von außen, siehe beispielsweise Sonneneinstrahlung, erhöht sich die Temperatur der LED. Dabei ist zu beachten, dass beispielsweise die Lichtstrommenge einer LED stark von der Sperrschicht-Temperatur abhängt. Je höher die Temperatur der LED, desto geringer der Lichtstrom, desto geringer die Lebensdauer, und auch eine Änderung der Lichtfarbe kann sich ergeben. Zur entsprechenden Kühlung ist der LED eine Kühleinrichtung 13 zugeordnet, die beispielsweise durch einen gerippten Kühlkörper, eine aktive Kühlung ggf. auch mit Kühlflüssigkeit oder dergleichen realisiert sein kann. Erwärmt sich die LED, entspricht sie im Wesentlichen einem schwarzen Körper, der bei Erwärmung eine entsprechende Schwarzkörperstrahlung zusätzlich zur eigentlichen Lichtstrahlung abgibt. Eine solche Schwarzkörperstrahlung weist ein sehr charakteristisches Spektrum auf, das einzig von der Temperatur des entsprechenden Körper abhängt. In dem erfindungsgemäß betrachteten Temperaturbereich ist diese Schwarzkörperstrahlung im Infrarotbereich.

Daher wird dem Leuchtmittel 2 erfindungsgemäß ein Infrarotsensor 6 zugeordnet, der diese Schwarzkörperstrahlung im Infrarotbereich erfasst.

Durch die Anordnung der Kühleinrichtung 13 wird die entsprechende Schwarzkörperstrahlung, die der Temperatur des Leuchtmittels 2 entspricht, im Wesentlichen nur im oberen Halbraum oberhalb der Kühleinrichtung 13 abgegeben, siehe hier Bezugszeichen 14, das den Abstrahlwinkel der Schwarzkörperstrahlung bezeichnet.

In dem Bereich dieses Abstrahlwinkels ist der Infratorsensor 6 angeordnet, so dass durch diesen die Temperatur des Leuchtmittels 2 detektiert werden kann.

Dabei ist der Infratorsensor 6 so angeordnet, dass er zwar im Abstrahlbereich der Schwarzkörperstrahlung, das heißt der Wärmestrahlung, allerdings nicht im Bereich der Lichtstrahlung, siehe den entsprechenden Abstrahlwinkel 4, angeordnet ist.

Der Infrarotsensor 6 ist mit einer Auswerte-/Steuereinrichtung 8 verbunden. Durch diese werden die entsprechenden Infrarotsensorsignale empfangen und in Temperaturwerte umgewandelt. Die entsprechenden Temperaturwerte werden insbesondere mit einem maximalen Temperaturgrenzwert verglichen. Überschreitet die erfasste Temperatur des Leuchtmittels 2 diesen maximalen Temperaturgrenzwert, kann die Leuchte und insbesondere das Leuchtmittel durch die Auswerte-/Steuereinrichtung abgeschaltet werden.

Es wurde bereits darauf verwiesen, dass sich das Leuchtmittel 2 auch passiv durch von außen einfallende Strahlung, beispielsweise Sonnenstrahlung, erwärmen kann. Diese Erwärmung kann zu Beeinträchtigungen des Leuchtmittels führen, wodurch dessen Einsatz gefährdet ist. Auch in diesem Fall kann die Temperatur durch den Infrarotsensor 6 erfasst werden und ggf. durch die Auswerte-/Steuereinrichtung eine aktive Kühlung des Leuchtmittels initiiert werden.

Die von außen einfallende Wärmestrahlung entspricht einer Umgebungswärmestrahlung, die bei der Temperaturmessung des Leuchtmittels abgeschirmt oder berücksichtigt werden muss. Zum Ausschalten dieser Umgebungswärmestrahlung kann beispielsweise dem Infrarotsensor 6 eine Abschirmung in Form einer Abdeckung, einer Folie, eines Kühlkörpers oder dergleichen zugeordnet sein. Dadurch ist sichergestellt, dass diese Umgebungswärmestrahlung nicht direkt den Infrarotsensor 6 erreicht.

Es besteht ebenfalls die Möglichkeit, dass solche Umgebungswärmestrahlung durch einen weiteren zweiten Infrarotsensor 10 erfasst wird. Dieser ist insbesondere in Richtung der Umgebungswärmestrahlung gerichtet und erfasst diese. Durch die Messwerte beider Infrarotsensoren 6 und 10 kann dann eine Kompensation der Umgebungswärmestrahlung bei der Ermittlung der Temperatur des Leuchtmittels erfolgen. Beide Infrarotsensoren übermitteln entsprechende Sensorwerte an die Auswerte-/Steuereinrichtung 8.

Es sei noch angemerkt, dass in Figur 1 im Wesentlichen nur ein Leuchtmittel, und nur ein Infrarotsensor 6 bzw. Infrarotsensor 10 dargestellt sind. Selbstverständlich können auch mehrere Leuchtmittel mit jeweils nur einem Infrarotsensor 6, oder auch in Kombination mit mehreren solcher Infrarotsensoren 6 verwendet werden. Dies gilt analog auch für den zweiten Infrarotsensor 10, der beispielsweise ebenfalls mehrfach vorhanden sein kann, um aus unterschiedlichen Bereichen einfallende Umgebungswärmestrahlung zu erfassen. Erfindungsgemäß erfolgt eine sichere Feststellung der Temperatur des entsprechenden Leuchtmittels, um beispielsweise eine Überhitzung desselben zu verhindern. Dadurch wird die Lichtabgabe, Lebensdauer und auch die Lichtfarbe vor einer negativen Beeinflussung durch Überhitzung des Leuchtmittels geschützt. Eine solche Temperaturmessung ist in explosionsgefährdeten Bereichen erfindungsgemäss von Vorteil, um eine Zündung durch ein überhitztes Leuchtmittel zu vermeiden.

## Patentansprüche

1. Verfahren zur Temperaturüberwachung zumindest einer LED (2) als Leuchtmittel (3) einer Leuchte (1), mit den folgenden Schritten:
i) Anordnung eines Infrarotsensors (6) in einem Leuchtengehäuse (9) der Leuchte (1) und außerhalb eines Lichtabstrahlwinkels (4) des Leuchtmittels (3);
ii.) Anordnung der Leuchte (1) in einem explosionsgefährdeten Bereich;
iii) Messen einer Wärmestrahlung des Leuchtmittels (3) mittels des Infrarotsensors (6);
iv) Auswerten des Infrarotsensorsignals zur Temperaturbestimmung des Leuchtmittels (3), und
v.) Abschalten des Leuchtmittels (3), wenn der ermittelte Temperaturwert einen vorgegebenen maximalen Temperaturgrenzwert überschreitet, um eine Zündung in dem explosionsgefährdeten Bereich durch ein überhitztes Leuchtmittel (3) zu vermeiden.

2. Verfahren nach Anspruch 1, **gekennzeichnet durch** den Schritt:
Abschirmen des Infrarotsensors (6) gegenüber Umgebungswärmestrahlung.

3. Verfahren nach einem der Ansprüche 1 bis 2, **gekennzeichnet durch** den weiteren Schritt:
Messen der Umgebungswärmestrahlung mittels eines weiteren Infrarotsensors (10) zur Kompensation der Umgebungswärme.

4. Verfahren nach einem der vorangehenden Ansprüche, **gekennzeichnet durch** den weiteren Schritt:
Zuordnen des Infrarotsensors (6) zu einem LED-Strahler, einem LED-Spot, einem LED-Strip, einem LED-Leuchtband oder dergleichen als Leuchtmittel (3).

5. Verfahren nach einem der vorangehenden Ansprüche, **dadurch gekennzeichnet, dass** bei einer Mehrzahl von LEDs jeder LED zur gleichzeitigen Erfassung der abgestrahlten Infrarotanteile aller LEDs ein Lichtleiter beispielsweise in Form einer Lichtsammelschiene zugeordnet ist, wobei am entsprechenden Austrittsende der Infrarotsensor insbesondere isoliert von Umgebungsstrahlung angeordnet ist.

## Claims

1. Method for monitoring the temperature of at least one LED (2) as an illuminant (3) of a light fixture (1), having the following steps:
i) arranging an infrared sensor (6) in a light fixture housing (9) of the light fixture (1) and outside of a light-emission angle (4) of the illuminant (3);
ii) arranging the light fixture (1) in an area at risk of explosion;
iii) measuring a heat radiation of the illuminant (3) by means of the infrared sensor (6);
iv) evaluating the infrared sensor signal for determining the temperature of the illuminant (3); and
v) switching off the illuminant (3) when the determined temperature value exceeds a predetermined, maximum temperature limit value in order to prevent ignition in the area at risk of explosion by an overheated illuminant (3).

2. Method according to claim 1, **characterized by** the step of:
shielding the infrared sensor (6) from ambient heat radiation.

3. Method according to one of claims 1 through 2, **characterized by** the further step of:
measuring the ambient heat radiation by means of another infrared sensor (10) to compensate for the ambient heat.

4. Method according to one of the preceding claims, **characterized by** the further step of:
assigning the infrared sensor (6) to an LED emitter, an LED spot, an LED strip, an LED light band, or the like as the illuminant (3).

5. Method according to one of the preceding claims, **characterized in that**, with a plurality of LED's, each LED is assigned a light guide, e.g., in the form of a light busbar, for simultaneous detection of the emitted infrared components of all LED's, wherein the infrared sensor is arranged at the corresponding exit end and, in particular, insulated from ambient radiation.

## Revendications

1. Procédé de surveillance de température d'au moins une DEL (2) comme source lumineuse (3) d'un luminaire (1), comprenant les étapes suivantes :
i) disposition d'un capteur infrarouge (6) dans un boîtier de luminaire (9) du luminaire (1) et en dehors d'un angle de rayonnement (4) de la source lumineuse (3) ;
ii.) disposition du luminaire (1) dans une zone à risque d'explosion ;
iii) mesure d'un rayonnement thermique de la source lumineuse (3) au moyen du capteur infrarouge (6) ;
iv) évaluation du signal du capteur infrarouge pour la détermination de la température de la source lumineuse (3) et
v) mise hors tension de la source lumineuse (3) lorsque la valeur de température déterminée dépasse une valeur limite maximale de température prédéfinie, afin d'éviter un allumage dans la zone à risque d'explosion par une source lumineuse (3) surchauffée.

2. Procédé selon la revendication 1, **caractérisé par** l'étape :
de blindage du capteur infrarouge (6) contre le rayonnement thermique ambiant.

3. Procédé selon l'une quelconque des revendications 1 à 2, **caractérisé par** l'étape supplémentaire :
de mesure du rayonnement thermique ambiant au moyen d'un capteur infrarouge (10) supplémentaire pour la compensation de la chaleur ambiante.

4. Procédé selon l'une quelconque des revendications précédentes, **caractérisé par** l'étape supplémentaire :
d'association du capteur infrarouge (6) à un projecteur à DEL, un spot à DEL, une barrette de DEL, une bande lumineuse à DEL ou similaire comme source lumineuse (3).

5. Procédé selon l'une quelconque des revendications précédentes, **caractérisé en ce que**, dans le cas d'une pluralité de DEL, un guide de lumière, par exemple sous la forme d'une barre de lumière omnibus, est associé à chaque DEL pour la détection simultanée des parts d'infrarouge émises de toutes les DEL, le capteur infrarouge étant disposé au niveau de l'extrémité de sortie correspondante, en particulier isolé du rayonnement ambiant.
